# EUROPEAN PATENT APPLICATION

(11) **EP 3 617 166 A1**
(43) Date of publication of application: **04.03.2020**
(21) Application number: 18791491.6
(22) Date of filing: 17.01.2018
(51) Int. Cl.: C03C 17/32, C03C 17/00, C03C 21/00, C03B 23/02

(54) **CURVED GLASS AND MANUFACTURING METHOD THEREOF**

(30) Priority: 24.04.2017 US 201762488867 P; 21.09.2017 KR 20170121969
(71) Applicant: LG Electronics Inc., Seoul 07336 (KR)
(72) Inventor: MOON, Byungchun, Seoul 06772 (KR); CHOI, Haknyun, Seoul 06772 (KR); AHN, Jungsik, Seoul 06772 (KR); LEE, Jinsoo, Seoul 06772 (KR); JANG, Bongchul, Seoul 06772 (KR); HWANG, Minkyu, Seoul 06772 (KR)
(74) Representative: Vossius & Partner Patentanwälte Rechtsanwälte mbB
(86) International application number: PCT/KR2018/000789
(87) International publication number: WO 2018/199431

(57) **Abstract**

The present disclosure relates to curved cover glass used for a curved display, and a manufacturing method thereof. The present disclosure provides tempered glass comprising: glass including a curved area; and a low-reflection coating layer, coated on a surface of the glass, composed of a mixture of a binder and a hollow material, wherein the glass comprises potassium ions which penetrate up to a predetermined depth therein. According to the present disclosure, a low-reflection coating layer is formed prior to curved surface processing, and thus, the low-reflection coating layer can be uniformly formed even on areas having different curvatures. Thus, the present disclosure can minimize the color difference generated in curved glass due to low-reflection coating layers.

## Description

### TECHNICAL FIELD

The present disclosure relates to curved cover glass used in a curved display and a manufacturing method thereof.

### BACKGROUND ART

The related art display is provided with cover glass for protecting the display. The cover glass should be highly light-transmissive and non-fragile. To this end, various strengthening tempering methods have been utilized to prevent the glass from being broken easily.

On the other hand, with development of display technologies, a curved display has begun to be developed, and accordingly, a demand for cover glass in a curved shape is increasing. Particularly, attempts have been made to apply the curved display to a vehicle or the like.

As an example of a glass tempering (strengthening) method, a chemical strengthening method has been utilized. The related art cover glasses were prepared by replacing sodium ions contained in glass with potassium ions through ion exchange. If the glass is cooled in presence of relatively bulky potassium ions than sodium ions, strength of the glass can be increased while maintaining the same volume as before.

The chemical strengthening method is a very useful glass strengthening method because it does not increase thickness of the glass and does not lower transparency of the glass. However, there are some disadvantages in the chemical strengthening method.

First, when chemically strengthened glass is exposed to high temperature, the chemical strengthening effect disappears. This causes a problem that high temperature processing cannot be performed after the glass is chemically strengthened. Secondly, since the chemical strengthening proceeds is performed in a manner of penetrating potassium ions into the glass, there is a problem that the chemical strengthening cannot be performed after a coating layer is formed on the glass. Due to these disadvantages, the chemical strengthening must always be carried out after curving, and the coating layer must be formed after the chemical strengthening.

On the other hand, in order to apply the curved glass to a vehicle or the like, a low-reflection coating layer is utilized to prevent the driver's view from being disturbed. The low-reflection coating layer absorbs light that is externally introduced, thereby preventing the cover glass from reflecting light and disturbing the driver's view.

Since the low-reflection coating layer may be broken at high temperatures and interfere with the chemical strengthening, the coating layer must be formed after the curving and the chemical strengthening. However, when the coating layer is formed on a curved region, the thickness of the coating layer may vary depending on a curvature of the curved region. In addition, when the coating layer is formed on the curved region, uniformity of the coating layer may be lowered as compared with a case where the coating layer is formed on a planar region. This may cause a color difference between the planar region and the curved region. This may give users a sense of difference.

The present disclosure suggests a curved glass, which can be chemically strengthened and simultaneously can solve the problems caused when forming a low-reflection coating layer, and a manufacturing method thereof.

### DETAILED DESCRIPTION OF THE DISCLOSURE

### TECHNICAL PROBLEM

First, the present disclosure is directed to providing tempered glass having a curved surface, on which a low-reflection coating layer is uniformly formed on a curved region, and a manufacturing method thereof.

Secondly, the present disclosure is directed to providing tempered glass having a curved surface, capable of minimizing a color difference between regions having different curvatures, and a manufacturing method thereof.

In addition, the present disclosure is directed to forming a coating layer, irrespective of a glass area, by switching low-reflection coating treatment to a coating method other than dry deposition.

### TECHNICAL SOLUTION

To achieve the first aspect of the present disclosure, there is provided tempered glass, including glass having a curved region, and a low-reflection coating layer coated on a surface of the glass and formed of a mixture consisting of a binder and a hollow material. The glass may contain potassium ions penetrated therein by a predetermined depth.

In one embodiment, a content of the hollow material included in the low-reflection coating layer may be higher at a center portion of the low-reflection coating layer than at an edge of the low-reflection coating layer.

In one embodiment, the binder may be formed in a manner that tetraethyl orthosilicate and trimethoxy-methylsilane are polymerized together.

In one embodiment, the glass may include a first region having a first curvature and a second region having a second curvature different from the first curvature.

In one embodiment, the first region and the second region may have a color difference (ΔE * ab) of 2 or smaller, based on the first region.

In one embodiment, the low-reflection coating layer coated on the first region and the low-reflection coating layer coated on the second region may have a thickness difference of 10 % or lower.

In one embodiment, the binder may have a weight average molecular weight of 1500 to 3500.

In one embodiment, the hollow material may have an average particle size of 60 to 90 nm.

In one embodiment, the low-reflection coating layer may be formed as a single layer.

In one embodiment, the potassium ion may penetrate into the glass by a depth of 30 to 50 um.

In one embodiment, the low-reflection coating layer may have a thickness of 100 to 150 nm.

In addition, the present disclosure provides a method for manufacturing tempered glass, the method including forming a binder polymer by polymerizing a first monomer and a second monomer, preparing a low-reflection coating solution by mixing and polymerizing the binder polymer and a hollow material, forming a low-reflection coating layer by coating the low-reflection coating solution on flat glass and plasticizing the flat glass, molding the flat glass with the low-reflection coating layer at a predetermined temperature so that the flat glass with the low-reflection coating layer has a curved surface, and penetrating potassium ions into the glass having the curved surface.

### ADVANTAGEOUS EFFECTS

Third, since a low-reflection coating layer is formed before curved surface processing, the low-reflection coating layer can be uniformly formed even on regions having different curvatures. Accordingly, the present disclosure can minimize a color difference caused on curved glass due to the low-reflection coating layer.

In addition, according to the present disclosure, since the low-reflection coating layer does not interfere with chemical strengthening, it is possible to form the low-reflection coating layer on a glass surface before the chemical strengthening. Accordingly, the low-reflection coating layer can be formed before the glass is curved, thereby enhancing uniformity of the low-reflection coating layer.

### BRIEF DESCRIPTION OF THE DRAWINGS

FIG. 1 is a conceptual view illustrating the related art method for performing chemical strengthening and low-reflection coating on a curved glass.
FIG. 2 is a conceptual view illustrating a method of manufacturing tempered glass according to the present disclosure.
FIG. 3 is a conceptual view illustrating a cross-section of tempered glass according to the present disclosure.
FIG. 4A is a cross-sectional photograph of tempered glass before chemical strengthening.
FIG. 4B is a cross-sectional photograph of tempered glass after chemical strengthening.
FIG. 5 is a graph showing reflectance before and after chemical strengthening.
FIG. 6A is a graph showing element distribution of tempered glass which has been chemically strengthened without a coating layer.
FIG. 6B is a graph showing an element distribution of the tempered glass according to the present disclosure.

### BEST MODE FOR CARRYING OUT PREFERRED EMBODIMENTS

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

First, the related art method of performing chemical strengthening on curved glass and forming a low-reflection coating layer will be described.

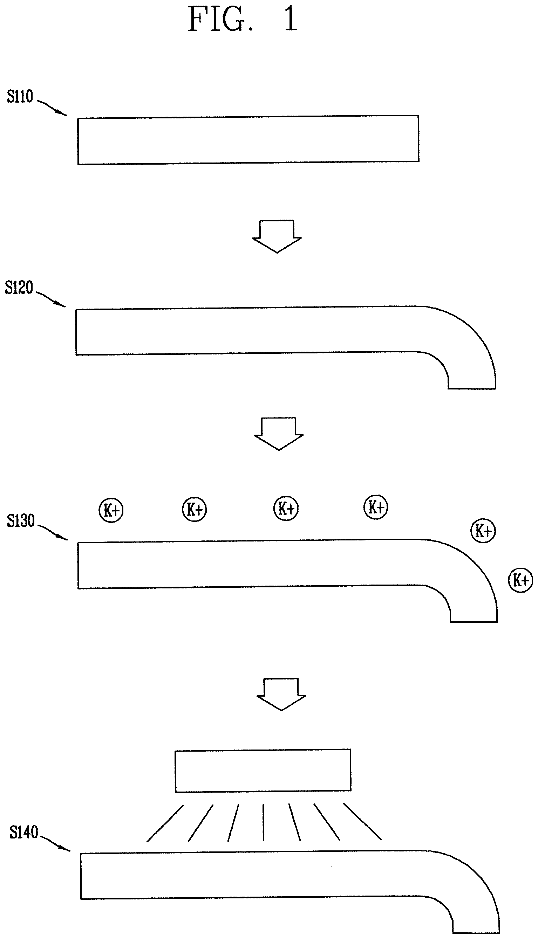

FIG. 1 is a conceptual view illustrating the related art method for performing chemical strengthening and low-reflection coating on curved glass.

According to the related art method, first, flat glass of a desired size is processed (S110), followed by forming (molding) the flat glass 110 into a curved shape (S120). The curved surface forming is performed at a high temperature of 600 °C or higher. As a result, when the chemical strengthening and low reflection coating are carried out before the curved surface forming, the chemical strengthening effect may disappear or the low-reflection coating layer may be broken during the curved surface forming.

Thereafter, in the related art method, the glass formed into the curved shape is chemically strengthened (S130). Chemical strengthening (tempering) is a method of increasing hardness of glass by penetrating potassium ions into the glass. When a coating layer is formed on a glass surface, it is difficult to penetrate the potassium ions. Due to this, the chemical strengthening must be performed before forming the coating layer on the glass surface.

Finally, a low-reflection coating layer is formed on the chemically strengthened curved glass surface (S140). A deposition method is utilized to form a relatively uniform coating layer on a curved surface. However, even if such a deposition method is utilized, it is difficult to reduce a thickness difference of the coating layer deposited on a flat region and a curved region down to a predetermined level or lower. As a result, the curved region has a different color from the flat region.

The present disclosure provides a method of uniformly forming a low-reflection coating layer in performing chemical strengthening and low reflection coating on a curved glass. Hereinafter, a method of manufacturing a tempered glass according to the present disclosure will be described with reference to the accompanying drawings.

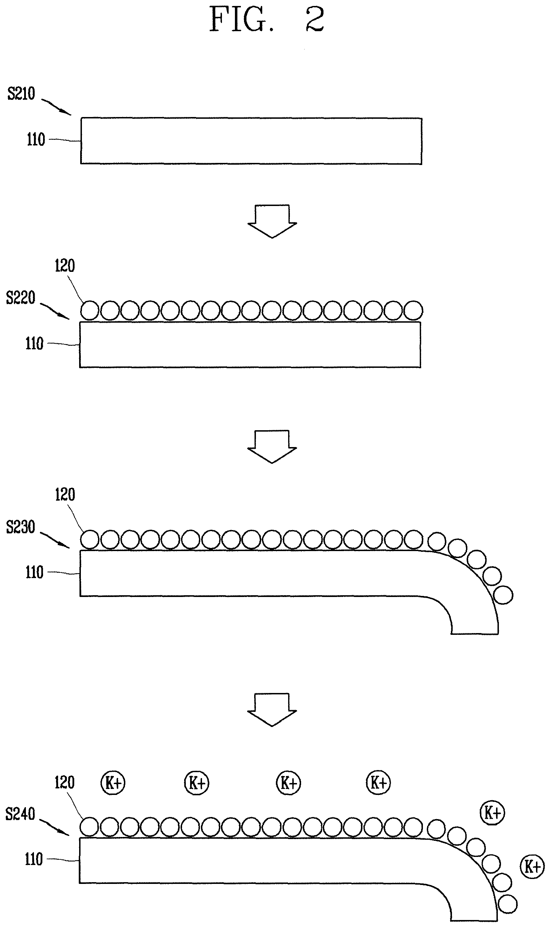

FIG. 2 is a conceptual view illustrating a method of manufacturing tempered glass according to the present disclosure.

First, in the manufacturing method according to the present disclosure, flat glass having a desired size is processed (S210) and a low-reflection coating layer is formed on the flat glass (S220).

The low-reflection coating layer 120 according to the present disclosure may be formed by applying a coating solution which is a mixture of a binder and a hollow material to a surface of the flat glass 110 and then performing a plasticization process.

Here, the hollow material serves to lower reflectance of the coating layer. Specifically, the hollow material lowers the reflectance by lowering a refractive index in a manner of forming an air layer on the glass surface.

Meanwhile, the hollow material may be made of silica. Since the hollow silica made of silica is not decomposed even at a high temperature of 600 °C or higher, the coating layer may not be broken even if curved surface forming is performed after forming the low-reflection coating layer.

On the other hand, an average particle size of the hollow material may be 60 to 90 nm. The hollow silica having a particle size of 60 nm or smaller is practically difficult to be manufactured. If the particle size of the hollow silica exceeds 90 nm, it becomes similar to the thickness of the coating layer to be explained later, which makes it difficult to form the coating layer uniformly.

Meanwhile, the binder serves to fix the hollow material to the glass. Since the binder is exposed to a high temperature of 600°C or higher during the curved surface forming, it should be made of a material that is not broken even at the temperature of 600 °C or higher. For example, the binder may be a silane-based binder. Specifically, the binder may be a binder such as tetraethyl orthosilicate (TEOS), trimethoxy-methylsilane (MTMS), fluoro-silaner, acryl-silane, and silazane.

On the other hand, a weight average molecular weight of the binder may be 1500 to 3500. When the weight average molecular weight of the binder is smaller than 1500, viscosity of the coating solution is lowered, so that the influence on foreign substances during coating may be increased, and intermolecular interaction may be weakened to deteriorate a coating property. On the other hand, when the weight average molecular weight of the binder exceeds 3500, the viscosity may become high, smoothness of the coating layer may be lowered, and stability of the coating layer may be deteriorated.

In the present disclosure, two or more kinds of binders may be mixed for use. For example, a mixture of TEOS and MTMS may be utilized as the binder. In this case, the coating solution may be prepared by mixing monomers of TEOS and MTMS, primarily polymerizing the mixture of the monomers, and then mixing the polymerized mixture with the hollow material. When TEOS and MTMS are primarily polymerized and then mixed with the hollow material, binder molecules surround the surface of the hollow material. This may result in making a core-shell structure in which the hollow material is a core and the binder molecules form a shell. This core-shell structure allows the hollow material to spread evenly when applied to the glass surface. Further, since the binder always surrounds the hollow material, the content of the binder is greater at an edge of the low-reflection coating layer, and the content of the hollow material is greater at the center of the low-reflection coating layer. Accordingly, the present disclosure can protect the hollow material, which substantially functions to lower the reflectance, from an external impact or the like.

The coating solution in which the hollow material and the binder are mixed may be applied onto the surface of the flat glass, then followed by the plasticization process, thereby forming the low-reflection coating layer. Here, the plasticization may be carried out in a plasticization furnace at a temperature of 400 to 750 °C for 4 to 6 minutes.

The low-reflection coating layer formed in the aforementioned manner may have a thickness of 100 to 150 nm. When the thickness of the coating layer is thinner than 100 nm, an effect of reducing reflectance may be lowered. On the other hand, when the thickness exceeds 150 nm, uniformity of the coating layer may be lowered and subsequent chemical strengthening may not be performed properly.

On the other hand, the low-reflection coating layer may be formed as a single layer so that potassium ions can pass through the coating layer well.

Meanwhile, porosity of the low-reflection coating layer according to the present disclosure may be 30 to 70%. When the porosity of the low-reflection coating layer is lower than 30%, a reflection suppressing effect may be hardly expected and potassium ions may be less likely to penetrate to the glass surface during chemical strengthening to be described later. On the other hand, when the porosity of the coating layer exceeds 70%, durability of the coating layer may be excessively decreased.

Meanwhile, the low-reflection coating layer formed in the aforementioned manner has reflectance of 1% or lower.

On the other hand, after the low-reflection coating layer is formed on the flat glass, the flat glass is subjected to curved surface forming (S230). The curved surface forming may be carried out in a press-molding manner at a temperature of 700 to 780 °C and by pressure of 0.005 to 0.006 MPa. However, the present disclosure is not limited thereto.

Since the hollow material and the binder according to the present disclosure are not decomposed at a temperature of 700 to 780°C, the low-reflection coating layer may not be broken even after the curved surface forming, and the uniform coating layer formed on the flat glass can be maintained as it is.

On the other hand, a radius of curvature of the curved glass may be 5R or greater. However, the present disclosure is not limited to this, and the radius of curvature may vary depending on the thickness of the glass and the area of the glass.

Finally, chemical strengthening is performed after the curved surface forming (S240).

The chemical strengthening may be carried out by immersing the glass in a KNO3 solution, which has been heated to a temperature of 380 to 435°C, for 2 to 8 hours. At this time, potassium ions penetrate into the glass due to a difference in potassium ion concentration between the glass and the solution. Thus, strength of the glass is improved.

The related art chemical strengthening is carried out in a manner that potassium ions penetrate into the glass by 30 µm or higher. In this case, the glass realizes a CS of 750 MPa or higher. The low-reflection coating layer according to the present disclosure is formed in a thickness of 150 nm or thinner and has porosity of 30% or higher, which may facilitate the potassium ions to penetrate into the glass surface. That is, the low-reflection coating layer according to the present disclosure does not interfere with the movement of the potassium ions. Exemplary experiments will be described later.

On the other hand, since chemical strengthening is carried out in a high pH solution, the low-reflection coating layer, especially the hollow material, may be destroyed due to hydrolysis. When using the binder that TEOS and MTMS are primarily polymerized, the binder can surround the hollow material surface and protect the hollow material from a strong basic solution.

Hereinafter, a tempered glass produced by the above-described method will be described.

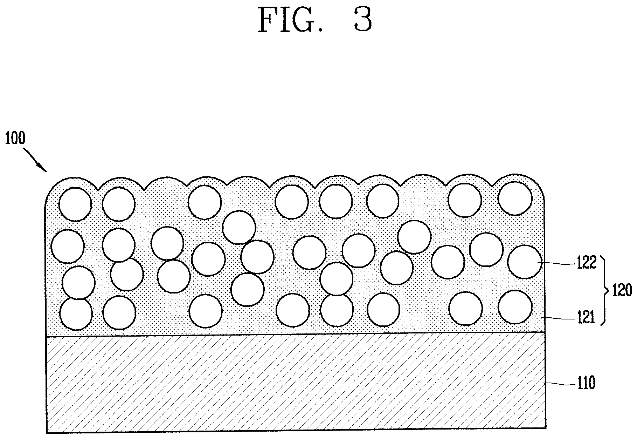

FIG. 3 is a conceptual view illustrating a cross-section of tempered glass according to the present disclosure.

The tempered glass 100 manufactured by the manufacturing method described above includes glass 110 having curved regions, and a low-reflection coating layer coated on a surface of the glass and made of a mixture of a binder 120 and a hollow material 130. Potassium ions have penetrated to the glass by a predetermined depth.

On the other hand, when a binder that TEOS and MTMS have primarily polymerized is used during the tempered glass production process, the content of the hollow material contained in the low-reflection coating layer is higher at the edge of the low-reflection coating layer than that at the center of the low-reflection coating layer. This structure protects the hollow material from a strong basic solution during chemical strengthening and protects the hollow material from an external impact.

On the other hand, the tempered glass may include curved surfaces having different curvatures depending on the use thereof. For example, the glass may include a first region having a first curvature and a second region having a second curvature different from the first curvature. Here, when the curvature is zero, the region may be flat, and the glass according to the present disclosure may include a flat region.

On the other hand, since the tempered glass according to the present disclosure is curved after forming the coating layer on the flat glass, the thickness of the low-reflection coating layer coated on the first region, and the thickness of the low-reflection coating layer coated on the second region may be different by 10% or lower, based on the thickness of the low-reflection coating layer coated on the first region.

Accordingly, the tempered glass according to the present disclosure may have a color difference ΔE*ab of 2 or smaller between the first region and the second region based on the first region. The color difference increases when a curvature difference between the two regions of the glass increases. A color difference ΔE*ab between a region having the maximum curvature and a region having the minimum curvature in the tempered glass according to the present disclosure is 2 or smaller. That is, in the tempered glass according to the present disclosure, the color difference between all the arbitrary regions becomes 2 or smaller.

On the other hand, a radius of curvature of the curved glass may be 5R or greater. However, the present disclosure is not limited to this, and the radius of curvature may vary depending on the thickness of the glass and the area of the glass. That is, the tempered glass according to the present disclosure may have a curvature of up to 1 / 5R. Accordingly, the maximum curvature difference in the tempered glass according to the present disclosure may be 1 / 5R. In the tempered glass according to the present disclosure, the color difference ΔE*ab between two regions having the maximum curvature difference is 2 or smaller.

Meanwhile, in the tempered glass according to the present disclosure, a penetration depth of potassium ions into the glass may be 30 to 50 µm. This is the same depth as the penetration depth of potassium ions when performing chemical strengthening in the absence of the coating layer. That is, according to the present disclosure, the same chemical strengthening effect as that of the related art can be obtained even if the chemical strengthening is performed after the formation of the coating layer.

Hereinafter, the present disclosure will be described in more detail with reference to Embodiments and Experimental Examples. However, it should be construed that the scope and contents of the present disclosure are not limited by the following Embodiments and Experimental Examples.

### Embodiment. Preparation of Tempered Glass

A tempered glass was prepared according to the aforementioned manufacturing method using a hollow silica, which had an average particle size of 73.29 nm and a dispersion degree of 0.031, as a hollow material and using a material, which was obtained by primarily polymerizing TEOS and MTMS, as a binder.

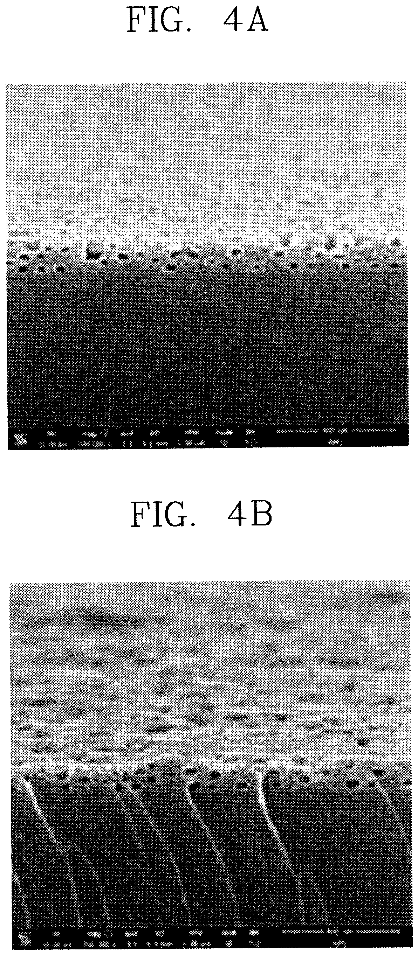

FIG. 4A is a cross-sectional photograph of tempered glass before chemical strengthening, and FIG. 4B is a cross-sectional photograph of tempered glass after chemical strengthening.

In the case of FIG. 4B, it can be confirmed that a wave pattern is generated on the glass, but this is a pattern generated during a glass cutting process. Even if the chemical strengthening is performed, the structure of the glass does not change as much as being visible to the naked eye.

Referring to FIGS. 4A and 4B, it can be seen that the coating layer is formed in the state where the binder surrounds the surface of the hollow material. Accordingly, the binder is mainly disposed at the edge of the coating layer, and the hollow material is mainly disposed at the center of the coating layer.

On the other hand, referring to FIG. 4B, it can be confirmed that the low-reflection coating layer has a thickness of 100 to 130 nm.

### Experimental Example 1. Measurement of Reflectance of Tempered Glass

When manufacturing the tempered glass according to the above embodiment, reflectance was measured before and after the chemical strengthening.

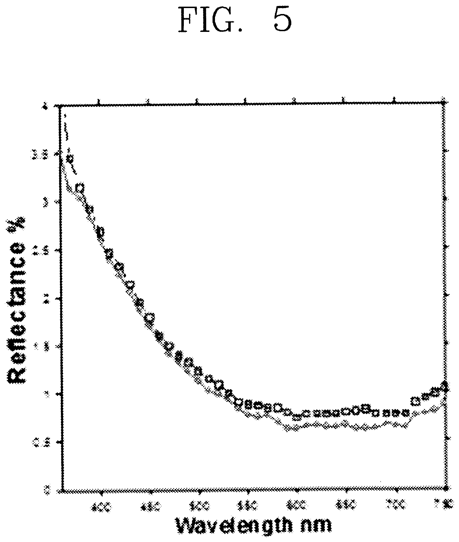

FIG. 5 is a graph showing reflectance before and after chemical strengthening.

Referring to FIG. 5, it can be confirmed that the reflectance of the tempered glass after chemical strengthening is slightly reduced. That is, it can be understood that the hollow material contained in the low-reflection coating layer is not destroyed even if the chemical strengthening is performed.

On the other hand, referring to FIG. 5, it can be confirmed that the tempered glass according to the present disclosure has reflectance of 1% or lower at a wavelength of 500 nm or longer. That is, it can be confirmed that the tempered glass according to the present disclosure has reflectance of 1% or lower even at a thickness of 100 to 150 nm.

### Experimental Example 2. Measurement of Color Difference of Tempered Glass

According to the measurement of the color difference between the curved region and the flat region of the tempered glass according to the present disclosure, ΔE*ab was 0.8. This is hardly distinguished with the naked eyes of a person. As a result, the tempered glass according to the present disclosure has little color difference caused by low reflection coating, so that it does not give the user a sense of foreign body.

On the other hand, for comparison, the color difference between the curved region and the flat region of the curved glass having the low-reflection coating layer formed by the related art deposition method was measured. According to the measurement, ΔE*ab was 8, the color of the flat region was purple, and the color of the curved region was yellow. This is a color difference which is possibly seen by a person.

### Experimental Example 3. Measurement of chemical tempering depth

Distribution of elements Na, Si, K according to the depth of the tempered glass produced in the embodiment was measured. On the other hand, for comparison, the elemental distribution of the tempered glass for which the chemical strengthening has been performed in the absence of the coating layer was measured.

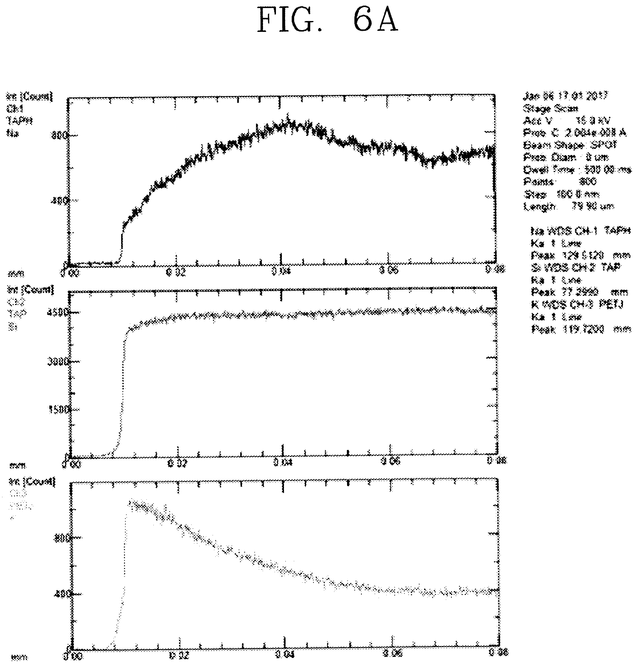

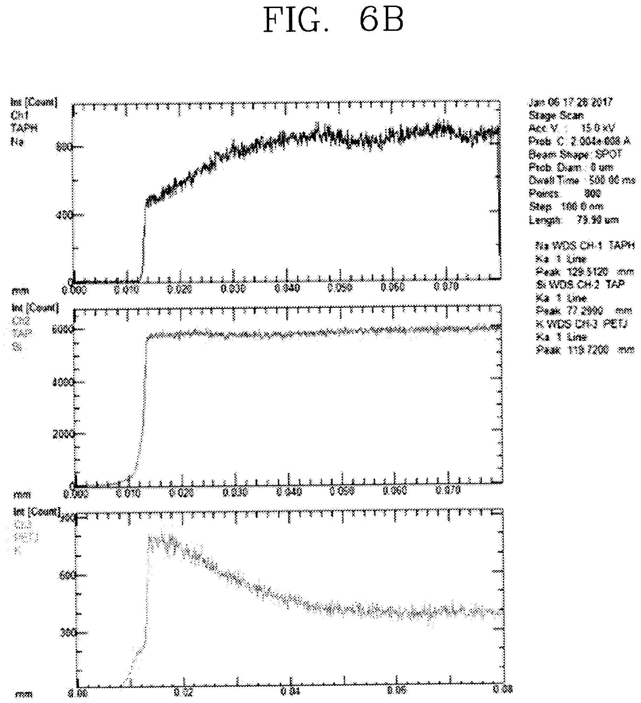

FIG. 6A is a graph showing element distribution of tempered glass which has been chemically strengthened without a coating layer, and FIG. 6B is a graph showing an element distribution of the tempered glass according to the present disclosure.

Comparing FIGS. 6A and 6B, it can be seen that the tempered glass subjected to the chemical strengthening in the absence of the coating layer and the tempered glass according to the present disclosure show similar distribution of the element K according to the depth of each of the tempered glasses. As a result, it can be seen that the chemical strengthening effect similar to the related art can be obtained by the manufacturing method according to the present disclosure even if the chemical strengthening is performed.

It will be apparent to those skilled in the art that the present disclosure may be embodied in other specific forms without from the spirit or essential characteristics thereof.

Therefore, it should also be understood that the above-described embodiments are not limited by any of the details of the foregoing description, unless otherwise specified, but rather should be construed broadly within its scope as defined in the appended claims, Therefore, all changes and modifications that fall within the metes and bounds of the claims, or equivalents of such metes and bounds are therefore intended to be embraced by the appended claims.

## Claims

1. Tempered glass, comprising:
glass having a curved region; and
a low-reflection coating layer coated on a surface of the glass and formed of a mixture consisting of a binder and a hollow material,
wherein the glass contains potassium ions penetrated therein by a predetermined depth.

2. The tempered glass of claim 1, wherein a content of the hollow material included in the low-reflection coating layer is higher at a center portion of the low-reflection coating layer than at an edge of the low-reflection coating layer.

3. The tempered glass of claim 2, wherein the binder is formed in a manner that tetraethyl orthosilicate and trimethoxy-methylsilane are polymerized together.

4. The tempered glass of claim 1, wherein the glass includes a first region having a first curvature and a second region having a second curvature different from the first curvature.

5. The tempered glass of claim 4, wherein the first region and the second region have a color difference (ΔE * ab) of 2 or smaller, based on the first region.

6. The tempered glass of claim 4, wherein the low-reflection coating layer coated on the first region and the low-reflection coating layer coated on the second region have a thickness difference of 10 % or lower.

7. The tempered glass of claim 1, wherein the binder has a weight average molecular weight of 1500 to 3500.

8. The tempered glass of claim 1, wherein the hollow material has an average particle size of 60 to 90 nm.

9. The tempered glass of claim 1, wherein the low-reflection coating layer is formed as a single layer.

10. The tempered glass of claim 1, wherein the potassium ion penetrates into the glass by a depth of 30 to 50 um.

11. The tempered glass of claim 1, wherein the low-reflection coating layer has a thickness of 100 to 150 nm.

12. A method for manufacturing tempered glass, the method comprising:
forming a binder polymer by polymerizing a first monomer and a second monomer;
preparing a low-reflection coating solution by mixing and polymerizing the binder polymer and a hollow material;
forming a low-reflection coating layer by coating the low-reflection coating solution on flat glass and plasticizing the flat glass;
molding the flat glass with the low-reflection coating layer at a predetermined temperature so that the flat glass with the low-reflection coating layer has a curved surface; and
penetrating potassium ions into the glass having the curved surface.
